(19) Europäisches Patentamt
European Patent Office
Office européen des brevets

(11) Publication number : 0 434 452 A1

# (12) EUROPEAN PATENT APPLICATION

(21) Application number : 90314098.6

(22) Date of filing : 21.12.90

(51) Int. Cl.$^5$ : C09K 9/02, G02F 1/15

(30) Priority : 22.12.89 US 456164

(43) Date of publication of application : 26.06.91 Bulletin 91/26

(84) Designated Contracting States : DE FR GB IT

(71) Applicant : DONNELLY CORPORATION
414 East Fortieth Street
Holland Michigan 49423 (US)

(72) Inventor : Varaprasad, Desaraju V.
327 Ridgeland Court, Apt. 2
Holland, Michigan 49423 (US)
Inventor : Lynam, Niall R.
248 Foxdown
Holland, Michigan 49424 (US)
Inventor : Habibi, Hamid R.
2630 Knagspough
Holland, Michigan 49424 (US)
Inventor : Desaraju, Padma
327 Ridgeland Court, Apt. 2
Holland, Michigan 49423 (US)

(74) Representative : Sheard, Andrew Gregory et al
Kilburn & Strode 30, John Street
London WC1N 2DD (GB)

## (54) Electrochemichromic solutions.

(57) Electrochemichromic solutions and devices based on the use of from about 5% by volume of a nonpolymeric material such as cyanoethylsucrose having a high volume resistivity and high dielectric constant to reduce leakage current without unduly increasing solution viscosity are disclosed. High quantities of such a material can be used even though solution viscosity increases to the point of preventing room temperature vacuum backfilling in order to take advantage of other features of such solutions such as low current leakage and long memory times for a coloured or clear state.

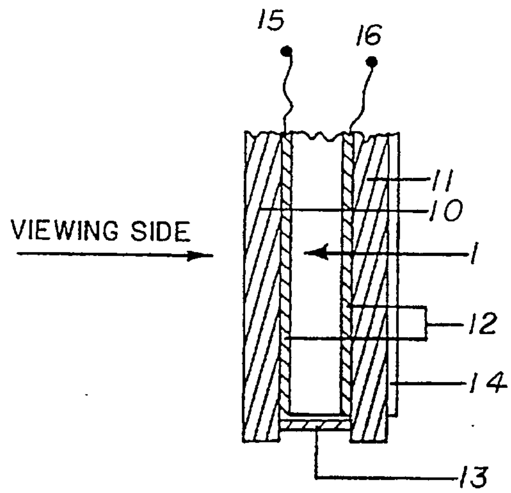


Fig 1

EP 0 434 452 A1

# ELECTROCHEMICHROMIC SOLUTIONS

The present invention relates to electrochemichromic solutions and devices containing these solutions Such solutions can be designed to either colour or clear, depending on the desired application, under the influence of applied voltage.

Such solutions have been suggested for use as rearview mirrors in automobiles such that in night driving conditions, application of a voltage would darken a solution contained in a cell incorporated into the mirror (U.S. Patent 3,280,701, October 25, 1966). Similarly, it has been suggested that windows incorporating such cells could be darkened to block out sunlight, and then allowed to lighten again at night. Electrochemichromic cells have been used as display devices and have been suggested for use as antidazzle and fog-penetrating devices in conjunction with motor vehicle headlamps (British Patent Specification 328017, May 15, 1930).

United States Patent 4,090,782 to Bredfeldt et al., United States Patent 4,572,119 to Ueno et al. (June 1988), Chemical Abstract 86: 196871c, 72-Electro. Chemistry, Vol. 86, 1977, I.V. Shelepin et al. in Electrokhimya, 13 (3), 404-408 (March 1977), O.A. Ushakov et al., Electrokhimya, 14 (2), 319-322 (February 1978), U.S.S.R. Patent 566863 to Shelepin (August 1977), U.S. Patent 3,451,741 to Manos, European Patent Publication 240,226 published October 7, 1987 to Byker, United States Patent 3,506,229 to Schoot et al., United States Patent 4,093,358 to Shattuck et al., European Patent Publication 0012419 published June 25, 1980 to Shattuck and United States Patent 4,139,276 to Clecak et al. all disclose electrochemichromic solutions of anodic and cathodic electrochromically colouring components which may provide self-erasing, high colour contrast, single compartment cells. Such anodic and cathodic colouring components comprise redox couples selected to exhibit the following reaction :

$$\underset{\text{(Low energy pair)}}{\underset{\text{(Colourless)}}{RED_1 + OX_2}} \underset{}{\overset{\text{voltage}}{\rightleftharpoons}} \underset{\text{(High Energy Pair)}}{\underset{\text{(Coloured)}}{OX_1 + RED_2}}$$

The redox couple is selected such that the equilibrium position of the mixture thereof lies completely to the left of the equation. At rest potential, the anodically colouring reductant species $RED_1$, and the cathodically colouring oxidant species $OX_2$ are colourless. To cause a colour change, voltage is applied and the normally colourless $RED_1$ is anodically oxidized to its coloured antipode $OX_1$, while, simultaneously, $OX_2$ is cathodically reduced to its coloured antipode, $RED_2$. These cathodic/anodic reactions occur preferentially at the electrodes which, in practical devices, are typically transparent conductive electrodes. Within the bulk of the solution, the redox potentials are such that when $RED_2$ and $OX_1$ come together, they revert to their lower energy form.

This means the applied potential need only suffice to drive the above reaction to the right. On removing the potential, the system reverts to its low energy state and the cell spontaneously self-erases.

Such redox pairs are placed in solution in an inert solvent. Typically, an electrolyte is also added. This solution is then placed into a relatively thin cell, between two conductive surfaces. In most applications, at least one of the conductive surfaces comprises a very thin layer of a transparent conductor such as indium tin oxide (ITO), doped tin oxide or doped zinc oxide deposited on a glass substrate so that the cell is transparent from at least one side. If the device is to be used in a mirror, the second surface is typically defined by a relatively thin layer of transparent conductor such as indium tin oxide, doped tin oxide or doped zinc oxide deposited on another glass substrate, which is silvered or aluminized or otherwise reflector coated on its opposite side. In the case of solar control windows, the second glass substrate would of course not be silvered on its opposite side so that when the redox pair is colourless, the window would be entirely transparent.

A wide variety of cathodically colouring species, anodically colouring species, inert current carrying electrolytes and solvent systems are described in the prior art. One problem with the prior art solvent-electrolyte-redox chemical systems in electrochemichromic devices relates to current leakage. When the electrochemichromic cell is coloured by the application of voltage, the coloured species $OX_1$ and $RED_2$ continually want to recombine and return to their equilibrium, colourless condition. The rate of recombination of the coloured species OX1 and RED2 within the bulk of the solution is inversely proportional to their diffusion coefficient in the solvent used. In order to counteract the tendency of the coloured species to recombine and go to the colourless equilibrium state, current must continually leak into the bulk solution to compensate for recombination.

Because current must flow across the conductive surface of the transparent conductor used on at least one of the substrates that sandwich the electrochemichromic cell, and because these transparent conductors

have finite sheet resistance, applied potential will be highest adjacent to the bus bar connector typically located at an edge perimeter and will be lowest near the centre of the device as current passes across the conductive glass surface to colour remote regions. Thus, if the leakage current is high and/or the sheet resistance of the transparent conductor is high, the potential drop that ensues across the transparent conductor itself results in a lower potential being applied to remote regions. Coloration is therefore nonuniform with the edge regions nearest the bus bar colouring deepest and the central regions colouring lightest. Such nonuniformity in colouration is commercially undesirable. For a given transparent conductor sheet resistance, the lower the leakage current the more uniform the colouration. This is an important advantage ; otherwise, a thicker and hence more costly and less transparent conductive coating would be needed to reduce the sheet resistance to accommodate the higher leakage currents seen with solvents suggested in the prior art.

Yet another disadvantage of higher leakage currents is their imposition of a drain on battery-power sources in some instances. If an electrochemichromic device were used in a sunroof, for example, it would be desirable to have the sunroof coloured dark while the car is parked in a parking lot. If the current leakage is too great, the operator could find that the car battery has been drained as a result of current being drawn by the coloured sunroof.

The addition of thickeners such as polymethylmethacrylate (PMMA) to the solvent will reduce leakage current. It will also reduce "segregation." When first bleached after being held for a prolonged period in the coloured state, bands of colour are seen adjacent to the bus bar connectors to the transparent conductive electrodes that sandwich the electrochemichromic solution. One problem with adding thickeners is that the solution can become so viscous that vacuum backfilling a thin electrochemichromic cell becomes commercially unfeasible.

As a result of these drawbacks, electrochemichromic solutions and devices based thereon have not achieved the degree of commercial success which they potentially could achieve.

According to a first aspect of the present invention there is provided an electrochemichromic liquid comprising a redox chemical pair whose colour is variable by the variation of the applied voltage and a solvent comprising from at least 5% by volume of a nonpolymeric material having a volume resistivity of at least $5 \times 10^9$ ohm.cm at 25°C and a dielectric constant of at least 15 at 25°C and 60 hertz (Hz).

The preferred nonpolymeric material is a cyano($C_{1-4}$)alkyl disaccharide. The $C_{1-4}$alkyl group is preferably ethyl. The disaccharide is preferably sucrose. Thus, it is particularly preferred that the nonpolymeric material is cyanoethylsucrose (CES).

The concentration of the nonpolymeric material is suitably up to 25, or 50% weight/volume. However, it is particularly preferred that the solvent comprises up to 90% weight/volume of the nonpolymeric material.

The solvent may additionally comprise propylene carbonate, 3-hydroxpropionitrile, 2-acetylbutyrolactone, 3,3'-oxydipropionitrile, 3-methylsulpholane or 2-methylglutaronitrile, or a mixture thereof. 2-acetylbutyrolactone is particularly preferred. This may be provided so that the solvent comprises at least 25% by volume of 2-acetylbutyrolactone.

In another embodiment the solvent comprises of from 90 to 500% weight by volume of the nonpolymeric material. Indeed, in some embodiments it is preferred that the solvent comprises substantially only the nonpolymeric material, e.g. the solvent is the nonpolymeric material.

The redox chemical pair will preferably comprise a cathodic colouring material, an anodic colouring material, and optionally a counterion and/or an electrolyte. Each of these components are suitably provided at a concentration of from 0.01 to 0.05, especially from 0.02 to 0.03 M in the solvent.

Particularly preferred cathodicly colouring materials are the viologens. A preferred anionic material is an aryl diamine, a benzadine, a fulvalene and/or (preferably) a phenazine.

Preferred counterions include fluoroanions, such as hexafluoroanions, such as hexafluorophospate and/or hexafluoroarsenate.

Preferred electrolytes include ammonium salts, such as an ammonium salt of the counterions. The preferred electrolytes include tetrabutylammonium hexafluorophosphate and/or tetraethylammonium perchlorate. Preferably the solvent is provided with an ultra-violet stabiliser.

Thus, a particularly preferred liquid will have a redox chemical pair which comprises from 0.02 to 0.05 M of methylviologen perchlorate and/or methylviologen hexafluorophosphate and from 0.02 to 0.05 M 5,10 -dihydro-5,10-dimethylphenazine. The electrochemichromic liquid will generally be a solution. Thus, the redox chemical pair will usually be in solution in the solvent. It is preferred that the redox chemical pair colours in the presence of an applied voltage and is colourless (or bleached) in the absence of an applied voltage.

Thus the invention in its broadest aspect relates to an electrochemichromic liquid comprising a redox chemical pair whose colour is variable by the variation of the applied voltage and a solvent comprising from at least about 5% weight by volume of a nonpolymeric material which is a cyano($C_{1-4}$)alkyl disaccharide such as cyanoethylsucrose.

The Applicants have discovered that current leakage may be reduced, without unduly increasing solution

viscosity, by adding to the solvent a nonpolymeric material having a volume resistivity of at least $5 \times 10^9$ ohm cm at 25°C and a dielectric constant greater than 15 at 25°C and about 60 hertz. Since the material is non-polymeric, a substantial percentage can be added without unduly increasing solution viscosity.

The use of a high concentration of the nonpolymeric material may suppress the rate of recombination of the coloured reduced and oxidized cathodic and anodic species such that the rate of self-erasure is sufficiently reduced that these electrochemichromic solutions may have extremely low current leakage and may be used in applications such as automotive sunroofs, automotive front windshield shade bands, large area architectural windows and variable opacity glass office partition panels previously unachievable using self-erasing electrochemichromic solutions revealed in the prior art.

In a broader aspect of this invention, the nonpolymeric, high volume resistivity and high dielectric constant material can be used per se as the solvent (i.e. the solvent is only the non-polymeric material, although room temperature vacuum backfilling with such a solution may often not be practical. Nevertheless, such solutions offer some advantages in some situations.

In a preferred embodiment, the electrochemichromic solution of the present invention has a redox chemical pair which colours in the presence of an applied voltage and bleaches to a colourless condition in the absence of an applied voltage. The chemical pair will usually be dissolved in the solvent. The solvent comprises at least about 5% weight by volume of a nonpolymeric material (which includes one or more such materials) having a volume resistivity of at least $5 \times 10^9$ ohm.cm at 25°C and a dielectric constant of at least 15 at about 25°C and at about 60 hertz. Such nonpolymeric materials are often used in capacitors. Cyanoethylsucrose is a preferred example of such a nonpolymeric material having high volume resistivity and required dielectric constant.

Volume resistivity is the resistance in ohms across any two opposing faces of a 1 cm × 1 cm × 1 cm cube of a given material. Its units are ohm centimetres (ohm cm). Volume resistivity is "high" as that term is used herein when it is $5 \times 10^9$ ohm cm or larger. The volume resistivity of cyanoethylsucrose is $5 \times 10^{11}$ ohm cm at 25°C This is dramatically higher than the volume resistivity of prior art solvents typically suggested for use in electrochemichromic liquids and devices :

| | |
|---|---|
| Propylene carbonate | $5 \times 10^7$ ohm cm |
| Dimethylformamide (DMF) | $1.67 \times 10^7$ ohm cm |
| Propionitrile | $1.17 \times 10^7$ ohm cm |
| Acetonitrile | $1.67 \times 10^9$ ohm cm |
| Methylethylketone | $2.78 \times 10^8$ ohm cm |
| Ethylene carbonate | $10^7$ to $10^8$ ohm cm |
| Acetone | $2.04 \times 10^8$ ohm cm |

For a given substance, the dielectric constant is the ratio of the capacitance of a condenser with that substance as dielectric to the capacitance of the same condenser with a vacuum as dielectric. Dielectric constant is thus a dimensionless quantity. It is frequency and temperature dependent. Devices of the present invention will typically be adapted to operate on direct current. As used herein, a dielectric constant is considered "high" when it is 15 or greater. The dielectric constant for cyanoethylsucrose at low frequencies (around 60 hertz as opposed to frequencies in the megahertz range) and room temperature (25°C) is around 38. Polymethylmethacrylate has a dielectric constant of 3.6 (25°C and 50 hertz) and a volume resistivity greater than $10^{15}$ ohm cm at 25°C.

In one embodiment of the invention which may be preferred for use in devices requiring rapid bleach times and easy fillability, e.g., rearview mirrors, from about 5 to about 90% weight by volume of the nonpolymeric material, such as cyanoethylsucrose, is added to the solvent in order to reduce current leakage in an electrochemichromic solution using such solvent. For devices where low leakage is paramount and ease of fillability and fast bleach time are not as important, e.g., windows and sunroofs, from about 90 to 500% weight by volume percent can be added to the solvent. Most electrochromic-suitable solvents can be used but one containing at least about 25% by volume 2-acetylbutyrolactone is preferred. The precise percentage weight by volume of the nonpolymeric material, e.g. cyanoethylsucrose which is added will vary depending on :

(1) the extent to which one desires to lower current leakage ;

(2) the extent to which one can increase the viscosity of the solvent without inhibiting vacuum backfilling ; and

(3) the extent to which the product application can accommodate the lengthening of bleach response time from a coloured state to a less coloured clear state that is generally concurrent with decrease in current leakage.

Generally, solutions having a viscosity less than about 100 centistokes are preffered since they may be less difficult to vacuum backfill.

Cyanoethylsucrose (CES 18304-13-7) has a high volume resistivity and a dielectric constant in excess of 15 at 25°C. and 60 hertz. Unlike thickening agents such as polymethylmethacrylate (PMMA) commonly referred

to in prior art which are polymers and usually are solids, cyanoethylsucrose is a viscous to pale yellow liquid of density 1.2 (kg/m$^3$) and has the structure :

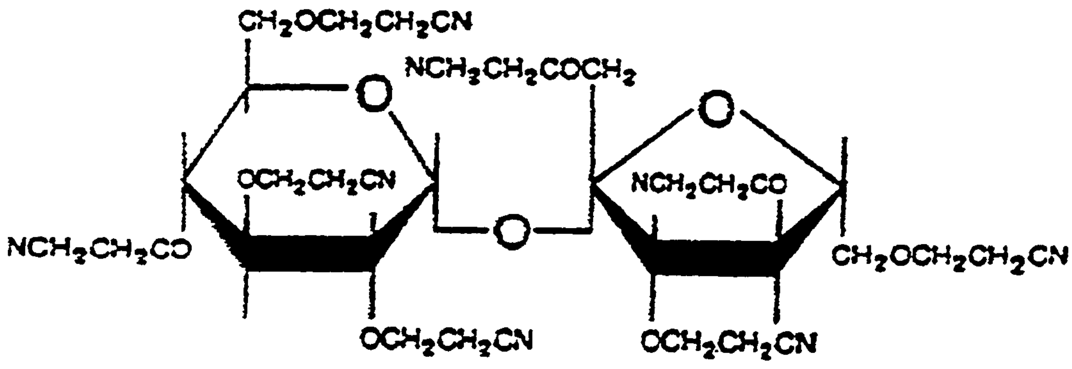

As indicated in Table 1, cyanoethylsucrose has been found to have an exceptionally high solubility in the solvent used in electrochemichromic solutions and devices.

The nonpolymeric material, e.g. cyanoethylsucrose, can be added proportionally to a suitable electrochemichromic solvent, or mixture of solvents, so that the degree of reduction in current leakage, and thereby, the magnitude of the suppression of self-erasure and the consequent improvement in uniformity of colouration and decrease in segregation, can be customized to best suit a particular application. For smaller area windows and for mirror devices of roughly 100 to 500 cm$^2$ area or thereabouts and with a cell thickness about 150 microns, a moderate leakage current in the 2 to 6 amperes per square metr e region may be tolerable and so smaller amounts of the nonpolymeric material, e.g. cyanoethylsucrose may be added to reduce current leakage into this range. For smaller windows and particularly for automotive rearview mirrors, it is advantageous to reduce the leakage current sufficiently to enable uniform colouration using transparent conductors of economical sheet resistance, but it may not be desirable to reduce current leakage such that the bleach response time is too slow.

By contrast, large area devices of the present invention, such as (e.g. automotive) windows preferably have a current leakage of 1 ampere per square metre, or less, so that battery drain and colour uniformity is acceptable. Ideally, the current leakage will be so low that, once coloured and held at open circuit, such devices essentially maintain their dimmed state for long periods, i.e., hours or even days. This persistence in colouration when the powering voltage is removed is commonly referred to as memory. Also, in comparison to, for example, automotive rearview mirrors where colouration and bleaching are sufficiently frequent that segregation may not be intolerable, especially when viewed at night in a dark automobile cabin, architectural windows, glass office partitions or automotive windows and sunroofs will typically be subjected to prolonged colouration of several hours or more and, when first bleached after such long colouration, they will typically be viewed under daylight or lighted conditions such that the bands of colouration that result from segregation may be plainly visible, and thus will be cosmetically objectionable and/or commercially impractical. For these large area electrochemichromic devices, an extremely low leakage current is most desirable, even if this results in some lengthening in the bleach response time.

The preferred liquids of the present invention have a suitable redox pair comprising a cathodically colouring material and an anodically colouring material. Viologens are preferred cathodic materials for the redox pair, e.g. $C_{1-8}$alkyl or aryl, e.g. phenyl and ($C_{1-8}$alkyl) phenyl viologens. Methylviologen, benzylviologen and heptylviologen are all satisfactory. Methylviologen is particularly preferred, e.g. at about 0.025 M.

In the structural formulae set forth below, $X^-$ represents the anion of the viologen salt.

Viologen 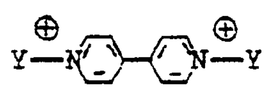 $2X^-$

(Y represents $C_{1-8}$alkyl or aryl, e.g. phenyl or ($C_{1-8}$alkyl)phenyl)

Methylviologen 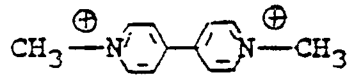 2X$^-$

Ethylviologen 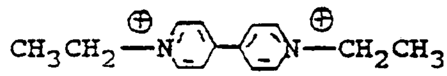 2X$^-$

Benzylviologen 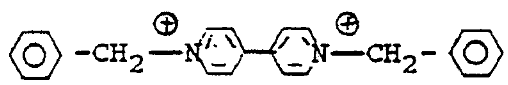 2X$^-$

Heptylviologen 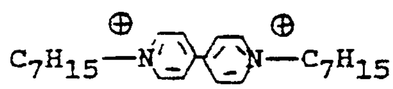 2X$^-$

Various anions are disclosed in the literature, though we have discovered that the most preferred anions are fluoroanions, e.g. hexafluoroanions, such as hexafluorophosphate ($PF_6^-$), and hexafluoroarsenate ($AsF_6^-$). The hexafluorophosphate counter ion is listed below with other acceptable, though less preferred counter ions for use with the viologens :

| | |
|---|---|
| Tetrafluoroborate | $BF_4^-$ |
| Perchlorate | $C10_4^-$ |
| Hexafluoroarsenate | $AsF_6^-$ |
| Trifluoromethane sulfonate | $CF_3SO_3^-$ |
| Hexafluorophosphate | $PF_6^-$ |

The preferred anodic colouring materials include phenazines, aryl diamines, benzidines and fulvalenes such as those that are set forth below :

(a) phenazines : e.g. di($C_{1-8}$)alkyl phenazines :

DMPA - 5,10-dihydro-5,10-dimethylphenazine R=$CH_3$

DEPA - 5,10-dihydro-5,10-diethylphenazine R=$C_2H_5$

DOPA - 5,10-dihydro-5,10-dioctylphenazine R=$C_8H_{17}$

(e.g. R=$C_{1-8}$alkyl).

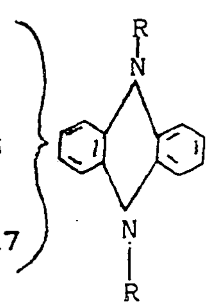

(b) diamines : e.g. phenylene diamines

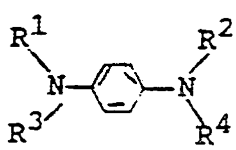

(each of $R^1$ to $R^4$ individually represent a $C_{1-8}$alkyl group)

TMPD — N, N, N', N'-tetramethylphenylenediamine

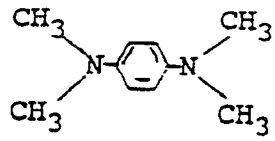

Npt

(c) benzidines :

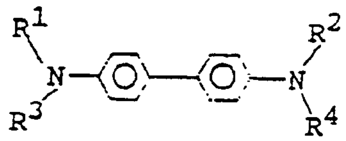

(each of $R^1$ to $R^4$ individually represent a $C_{1-8}$alkyl group)
TMBZ — N, N, N', N'-tetramethylbenzidine

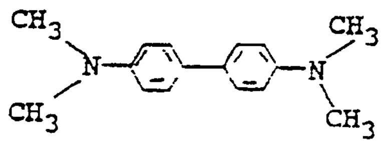

(d) a fulvalene
TTF-Tetrathiafulvalene

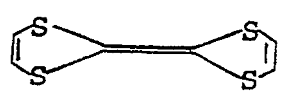

Most preferred are phenazines, e.g. 5,10-dihydro-5,10-dimethylphenazine (DMPA), 0.025 molar solution.

Numerous electrolytes can be used in the present invention. One which is often suggested for electrochemichromic cells and which is acceptable in solutions of the present invention is a tetraethylammonium perchlorate. A 0.025 molar solution is preferred. UV stabilizers such as Uvinul™ 400 and Cyasorb™ 24 at a concentration up to approximately 15% by weight, can also be used in the solutions of the present invention.

The most preferred electrochemichromic solution of the invention comprises a solvent combination containing of from 0.02 to 0.05, and most preferably about 0.025 molar, methylviologen hexafluorophosphate or methylviologen perchlorate, from 0.02 to 0.05 and most preferably about 0.025 molar tetrabutylammonium hexafluorophosphate or tetraethylammonium perchlorate, and from 0.02 to 0.05 and most preferably about 0.025 molar 5,10-dihydro-5,10-dimethylphenazine.

The preferred solvent (e.g. for use in rearview mirrors or like applications requiring rapid bleach and ease of fillability) comprises from 5 to 90% weight by volume of the nonpolymeric material (e.g. cyanoethylsucrose), most preferably about 45%, in a lactone such as 2-acetylbutyrolactone. Where low leakage current is paramount, from 90 to 500% weight by volume, preferably about 300%, of the nonpolymeric material, e.g. cyanoethylsucrose is used in a lactone, e.g. 2-acetylbutyrolactone.

A second aspect of the present invention relates to an electrochemichromic device comprising :

at least two spaced apart plates, each having an inwardly facing conductive surface ;

an electrochemichromic liquid located between the inwardly facing conductive surfaces, the liquid comprising a redox chemical pair whose colour is variable by the variation of the applied voltage and a solvent comprising from at least 5% weight by volume of the nonpolymeric material having a volume resistivity of at least $5 \times 10^9$ ohm.cm at 25°C and a dielectric constant of at least 15 at 25°C and 60 hertz.

The nonpolymeric material is preferably a cyano($C_{1-4}$)alkyldisaccharide such as cyanoethylsucrose.

Thus, the electrochemichromic liquid will generally be located in the device between the inwardly facing conductive surfaces. It is preferred that the plates are transparent, such as made of glass.

The conductive surface is suitably made of indium tin oxide (ITO), or tin oxide or zinc oxide.

Suitably the width between the plate is from 100 to 250 microns, such as from 130 to 170 microns. The resistance of the conductive surface is suitably from 10 to 20, such as from 13 to 17 ohms/square sheet.

The device is suitably a cell, such as a solar cell, or a window, sunroof or mirror. If the device is a mirror it will suitably be provided with a relective coating on one of the plates. This will generally be provided on an outwardly facing surface of one of the plates. The reflective coating will suitably be metallic, such as aluminium or silver (or an alloy of either of these metals) coating. The device will also usually be provided with at least one terminal for the supply of electric current.

The plates may be spaced apart by a seal, which may be provided around the periphery of the plates, to thereby contain the electrochemicchromic liquid between opposing plates. The seal may be provided with spacers. These may be glass, such as glass balls. It is preferred that these spacers are provided, the spacer corresponds to the with between two opposing plates. Thus, the spacer will suitably have a diameter of from 100 to 250 microns, such as from 130 to 170 microns.

The invention also encompasses an electrochemichromic device comprising :

at least two spaced apart plates, each having an inwardly facing conductive surface ;

an electrochemichromic liquid located between the inwardly facing conductive surfaces, the liquid comprising a redox chemical pair whose colour is variable by the variation of the applied voltage and a solvent comprising from at least about 5% weight by volume of a nonpolymeric material which is a cyano($C_{1-4}$)alkyldisaccharide such as cyanoethylsucrose.

Preferred features and characteristics of the second aspect are as for the first mutatis mutandis.

A third aspect of the present invention relates to a method of reducing current leakage in an electrochemichromic liquid which comprises a redox chemical pair whose colour is variable by the variation of the applied voltage, the method comprising introducing to a solvent containing the redox chemical pair at least about 5% weight by volume of a nonpolymeric material having a volume resistivity of at least $5 \times 10^9$ ohm.cm at 25°C and a dielectric constant of at least 15 at 25°C and 60 hertz.

The nonpolymeric material is suitably a cyano($C_{1-4}$)alkyldisaccharide, such as cyanoethylsucrose.

Preferred features and characteristics of the third aspect as as for the first and second mutatis mutandis.

The invention will now be described by way of example with reference to the accompanying drawing, in which :

Figure 1 is a section view of an electrochemichromic device of the present invention.

Figure 1 illustrates a electrochemichromic cell 1 which solutions of the present invention can be used to fill. Cell 1 comprises a pair of transparent (glass) plates 10 and 11 each of which is coated on an inwardly facing surface with a half wave indium tin oxide coating layer 12 of about 15 ohms/square sheet resistance. The plates 10 and 11 are separated by peripheral seal 13 so that the interior of the cell has a thickness of 150 microns. The cell 1 is sealed at its perimeter by peripheral seal 13. The seal 13 comprises an epoxy material, to which 150 micron diameter spacers are added, and silk-screened to a thickness of about 150 microns. Glass beads are used as spacers. As shown, the cell 1 is intended to be used as a mirror, since the rear surface of glass plate 11 is coated with a silver reflector layer 14. If the device were used as a window, layer 14 would not be present. The conductive indium tin oxide layers 12 are connected to electrical terminals 15 and 16 so that a voltage can be established across a solution located between plates 10 and 11 in cell 1.

To vacuum backfill the cell 1, a small gap is introduced into seal 13 at some extremity corner. This acts as a fill hole. The electrochemichromic solution can be filled through this hole and once inside the cell, the solution is contained by seal 13 between the glass plates 10 and 11. It is desirable to use a small fill hole so that the entrance orifice is small. Otherwise, it is difficult to seal the fill hole once the cell cavity is full such that no leaks occur through the fill hole. Since the fill hole is small, typically less than 1 mm × 1 mm × 150 microns it is difficult to fill the cell cavity using a hypodermic needle or the like. Also, since there is only one fill hole, back pressure would impede complete filling through one fill hole anyway. Thus a means is needed to fill such a cell cavity that overcomes the above problems. Vacuum backfilling is such a means.

In the vacuum backfill technique, the empty cell is placed in a vacuum chamber along with a container (typically a dish or small cup) of the electrochemichromic liquid intended to be filled through the single fill hole into the cell cavity. The chamber is evacuated to a high vacuum, 1 mm Hg or better. Means are then used to lower the fill hole just under the surface of the electrochemichromic liquid. The chamber is now vented to atmospheric pressure (typically using nitrogen or similar inert gas).

Atmospheric pressure forces the fluid into the cell cavity and so fills it. However, how completely it fills is a function both of the vacuum pressure upon evacuation $P_V$ and the atmospheric pressure $P_A$ to which the chamber

is vented during venting.

Although a vacuum pump can evacuate a vacuum chamber to $10^{-6}$ mm Hg or better, the vapour pressure of the solvent limits how high a vacuum can be achieved. This is because the vacuum pump reduces the vacuum pressure down to the vapour pressure (at the temperature of the chamber) of the fluid used. Once the vacuum pressure equals the vapour pressure, vacuum pressure will go no lower until all the fluids have evaporated. Thus the choice of solvent, through its vapour pressure, dictates how large a bubble will remain after backfilling a given cell volume. As the device area increases such as might be encountered in window devices, the problem gets worse and, unless a sufficiently low vapour pressure solvent is chosen, or unless means such as cooling the fluid and chamber (to reduce vapour pressure) or overpressuring during backfill (to force more liquid in) are employed, a cosmetically unacceptable bubble will be left within the electrochemichromic device, e.g. cell. While a small bubble of about 1 mm diameter may dissolve over time, a larger bubble will not completely disappear. Further, if the viscosity of the fluid to be filled is very high, then it may be difficult to fill at room temperature. If higher filling temperatures are used, the residual bubble may be larger as the vapor pressure increases with temperature. Simple physics teaches that :

$$P_A V_A = P_V V_V \quad (1)$$

where

$P_A$ = pressure to which the chamber is finally vented.

$V_A$ = volume of gas trapped in the cell after completely filling the cell.

$P_V$ = vacuum pressure in the chamber after evacuation and prior to filling.

$V_V$ = volume of the empty cavity, i.e., cell volume.

Since undissolved gas trapped in the cell after incomplete filling will usually form a bubble, then VA can be written as :

$$V_A = /4 \ d2 \ t \quad (2)$$

where

d is the bubble diameter ; and

t is the cell cavity thickness.

Also, $P_A$ is usually 760 mm Hg although it is important to stress that the chamber can be overpressured to several atmospheres or more after filling if it is desired to fill more completely. However, in the case where $P_A$ = 760 mm Hg and where $V_V = A \times t$ where A is the cell area and t is the interpane thickness, we have :

$$P_V \cdot A \cdot t = 760 \cdot /4 \cdot d^2 \cdot t \quad (3)$$

which reduces to

$$P_V = 5.969 \ d^2/A \quad (4)$$

where d is in mm and A is in $cm^2$

Likewise

$$d = (P_V \times A)/5.969 \quad (5)$$

Equation (4) expresses the relationship between the residual gas bubble diameter d (in mm) and the cell area (in $cm^2$) to the pressure in the chamber, $P_V$, prior to venting to atmosphere and thus backfilling.

Note that if two solvents or more are mixed together to form an ideal solution, the vapour pressure of the solution is simply the sum of the vapour pressures of each component. Cyanoethylsucrose has a very low vapour pressure. Thus its use with other solvents of higher vapour pressures can enhance their usefulness in electrochemichromic solutions intended to be vacuum backfilled. This is particularly important when large area devices such as 1 $m^2$ windows where the volume of cell cavity can be as large as 150 $cm^3$ or thereabouts.

Another advantage of the nonpolymeric material such as cyanoethylsucrose relative to other additives used to lower current leakage may be their relatively low impact on overall solution viscosity. This advantage may be realised by comparing solutions using one of the polymeric material, here cyanoethylsucrose, to solutions using the prior art thickener polymethylmethacrylate (PMMA).

Thus the invention will now be described by way of example with reference to the accompanying Examples which are provided by means of illustration and are not to be construed as being limiting on the present invention.

## COMPARATIVE EXAMPLE A

The current current data shown below was determined using the electrochemichromic cell 1 as described above and with reference to Figure 1.

The current leakage data in Table 1 was obtained by placing the various electrochemichromic solutions in Table 1 within the 150 micron space between cell 1. Viscosity was determined using a conventional viscometer and test method. Indium-tin oxide transparent conductor coatings of 15 ohms/square sheet resistance were used on the inwardly facing surfaces of the glass substrates that sandwiched the electrochemichromic solution.

The window area in cell 1 was about 110 $cm^2$ for the measurements. Each solution had 0.025 molar methylviologen perchlorate (or hexafluorophosphate) as the cathodic colouring material, 0.025 molar 5,10-dihydro-5,10-dimethylphenazine as the anodic colouring material and 0.025 molar tetraethylammonium perchlorate (or tetrabutylammonium hexafluorophosphate) as the electrolyte. The solvent was then varied shown in column 1 in Table 1.

Column 1 in Table 1 gives the solvents and the amount of cyanoethylsucrose added. Column 2 gives the counterion used. Column 3 gives the concentration of cyanoethylsucrose added in percent weight per volume. Percent wt/vol is the weight of cyanoethylsucrose (or PMMA) in grams dissolved in (or mixed with) 100 mls of solvent. For example, a 417.8% wt/vol solution of cyanoethylsucrose in 3-hydroxypropionitrile (HPN) is formed by adding 417.8 grams of cyanoethylsucrose to 100 mls of 3-hydroxypropionitrile. Column 4 gives the concentration of cyanoethylsucrose in % wt/wt. Percent wt/wt is the weight in grams of cyanoethylsucrose (or PMMA) present in 100 grams in total of the solution. For example, an 80% wt/wt solution of cyanoethylsucrose in 3-hydroxypropionitrile is formed by adding 8 grams of cyanoethylsucrose to 2 grams of 3-hydroxypropionitrile. Column 5 gives the % transmission at zero applied potential as measured at the centre of the cell using conventional transmission measurement means including use of a standard light source (Standard Illuminant A) and a photopic detector. Column 6 is the % transmission reached when a potential of 1 volt is applied to fully colour these solutions. Column 7 is the time in minutes taken for the cell to self-bleach, at open circuit, from its fully coloured state to a transmission equal to 90% of its range. Thus column 7 indicates how much colouration decreases over time when a colouring voltage is removed and the cell is left, open circuit, in its coloured state. Therefore, column 7 is an indication of the effect commonly known as memory in this technology. Column 8 is the leakage current in amperes per square metre of cell area when filled into cell 1 as described above and when fully coloured under 1 volt applied potential. Column 9 is the solution viscosity, in centistokes.

Table 1

| Column 1<br>Solvent | 2<br>Counterion | 3<br>% Wt/Vol | 4<br>% Wt/Wt. | 5<br>Clear State %T Zero Potential | 6<br>Colored State %T 1V Applied | 7<br>Open Circuit Memory (Min.) Low to 90% Of Range | 8<br>Leakage $A/M^2$ | 9<br>Viscosity 25° C. Centistokes |
|---|---|---|---|---|---|---|---|---|
| PC + PMMA | $ClO_4$ | 5% | 4% | 84.7 | 15.0 | .52 | 6.44 | 6.4 |
| | $ClO_4$ | 10% | 7.8% | 82.5 | 13.3 | .55 | 5.65 | 25.3 |
| | $ClO_4$ | 15% | 11.2% | 83.7 | 11.8 | .74 | 4.37 | 131.7 |
| PC + CES | $ClO_4$ | 5% | 4% | 83.9 | 13.4 | .48 | 6.88 | 2.38 |
| | $ClO_4$ | 25% | 17.4% | 84.2 | 10.5 | .69 | 4.4 | 4.48 |
| | $ClO_4$ | 50% | 29.6% | 81.1 | 10.2 | 1.2 | 2.48 | 9.28 |
| | $ClO_4$ | 90% | 43.1% | 85.2 | 11.2 | 3.31 | 1 | 25.9 |
| | $PF_6$ | 476.2% | 80% | 85.5 | 12.8 | 24.0%T* | 0.0417 | 1645 |
| HPN + CES | $ClO_4$ | 5% | 4.6% | 82.3 | 12.4 | .58 | 6.32 | 4.1 |
| | $ClO_4$ | 25% | 19.4% | 84.1 | 11.7 | .86 | 4.21 | 6.5 |
| | $ClO_4$ | 50% | 32.5% | 82.7 | 11.6 | 1.4 | 2.54 | 11.41 |
| | $ClO_4$ | 90% | 46.4% | 82.6 | 11.2 | 2.86 | 1.27 | 26 |
| | $PF_6$ | 417.8% | 80% | 85.1 | 14.5 | 38.0%T* | 0.0741 | 7711 |
| ABL + CES | $ClO_4$ | 90% | 43.1% | 85.6 | 13.6 | 2.70 | 0.5 | 57.9 |
| | $PF_6$ | 476.2% | 80% | 85.7 | 13.3 | 24.0%T* | Microampe | 2605 |
| MGNT + CES | $PF_6$ | 3.96% | 4% | 83.4 | 15.3 | 1.06 | 2.42 | 7.4 |
| | $PF_6$ | 63.2% | 40% | 84.6 | 12.6 | 5.13 | 0.528 | 43.3 |
| | $PF_6$ | 142.8% | 60% | 84.7 | 16.0 | 78.7%T* | 0.236 | 222 |
| MS + CES | $PF_6$ | 4.97% | 4% | 84.9 | 16.0 | 2.83 | 1.37 | 11.5 |
| | $PF_6$ | 78.9% | 40% | 82.9 | 13.0 | 81.4%T* | 0.264 | 105 |
| | $PF_6$ | 188.0% | 60% | 84.3 | 11.8 | 37.9%T* | 0.856 | 583 |
| ODPN + CES | $ClO_4$ | 25% | 19.3% | 85.7 | 11.9 | 1.34 | 2.07 | 14.81 |
| | $ClO_4$ | 50% | 32.4% | 85.4 | 12.6 | 1.34 | 1.26 | 27.91 |
| | $ClO_4$ | 90% | 66.3% | 83.3 | 17.7 | 8.17 | 0.426 | 98.81 |
| | $PF_6$ | 416.67% | 80% | 84.9 | 14.5 | 25.7%T* | 0.07 | 2509 |
| HPN/ABL 50%:50% | $PF_6$ | 74.1% | 40% | 85.5 | 11.9 | 2.38 | 1.30 | 22.21 |

* % transmission reached after 15 minutes of bleach at open circuit having started at the fully colored state.

Key to abbreviations :—

| | |
|---|---|
| PC | = Propylene Carbonate |
| HPN | = 3-Hydroxypropionitrile |
| CES | = Cyanoethylsucrose |
| PMMA | = Polymethylmethacrylate (Aldrich 90,000 Average Molecular Weight Cat. No. 18,244-9 ; Lot No. 09409CW) |
| ABL | = 2-Acetylbutyrolactone |
| MGNT | = 2-Methylglutaronitrile |
| MS | = 3-Methylsulfolane |
| ODPN | = 3,3'-Oxydipropionitrile |
| $ClO_4$ | = Perchlorate |
| $PF_6$ | = Hexafluorophosphate |
| % wt/vol | = Wt (grams) of CES or PMMA dissolved in 100 mls of solvent |
| % wt/wt | = Wt (grams) of CES or PMMA dissolved in 100 grams of total solution |

In Table 1, data is given for solutions based on the solvents propylene carbonate, 3-hydroxypropionitrile, 2-acetylbutyrolactone, 2-methylglutaronitrile, 3-methylsulfolane and 3,3'-oxydipropionitrile. The propylene carbonate solution was thickened with 5, 10 and 15% weight/volume polymethylmethacrylate and with 5, 25, 50, 90 and 476.2% weight/volume cyanoethylsucrose. 3-Hydroxypropionitrile, acetylbutyrolactone, 2-methylglutaronitrile, 3-methylsulfolane and 3,3'-oxydipropionitrile were diluted with cyanoethylsucrose in the percentages indicated in Table 1.

As can be seen from the data, the use of polymethylmethacrylate does reduce current leakage. However, solution viscosity increases dramatically. Thus to reduce current leakage to 4.37 amps per square metre, one must increase the solution viscosity to 131.7 centistokes. This makes the solution so viscous that it is disadvantageous to use it in a commercial electrochemichromic cell which is vacuum backfilled.

In contrast, a comparable leakage current of 4.40 amperes per square metre can be obtained in a solution comprising propylene carbonate and 25% cyanoethylsucrose having a viscosity of only 4.48 centistokes. This striking contrast makes it possible, through the use of cyanoethylsucrose, to lower the current leakage of an electrochemichromic cell without unduly increasing its viscosity. Similar results are obtained for combinations of cyanoethylsucrose and other solvents shown in Table 1.

An even more dramatic reduction in current leakage can be achieved by further increasing the amount of cyanoethylsucrose added to these solvents, and solvent mixtures. We have discovered that solutions in various solvents of cyanoethylsucrose added to a high concentration of 80% weight per weight or more can be used as electrochemichromic solutions, with particular applicability to large area devices such as windows. Note that, as the amount of cyanoethylsucrose added increases, the current leakage continues to decrease. As shown in column 7, the memory of the higher concentration cyanoethylsucrose solutions is long which means that only minimum power need be expended to maintain electrically at a dimly transmitting state devices using solutions of the present invention. Indeed, memory for several of these is sufficiently long for them to allow removal of the power source at least periodically once devices that utilize these solutions have been dimmed to a desired coloured state. Since the rate of self-erasure is so well suppressed by the addition of high concentration of cyanoethylsucrose, such devices would remain dimly transmitting even when unpowered for prolonged periods.

Also, commensurate with the low current leakage, segregation performance for these solutions when coloured for extended periods was excellent. As the amount of cyanoethylsucrose added was increased from around 4% weight per weight to about 80% weight per weight or more, devices such as windows utilizing these solutions could be coloured for ever increasing periods without segregation of the respective coloured cathodic and anodic species becoming evident or noticeable. Finally, pure cyanoethylsucrose which is a gel-like fluid of boiling point 180°C and freezing point -10°C was itself successfully used as the solvent in an electrochemichromic solution to give a device of remarkably low leakage current, which was in the microamps/square metre range.

As column 9 indicates, many of the higher cyanoethylsucrose solutions were extremely viscous which leads to great difficulty in using a vacuum backfill technique at room temperature to fill cells. However, we were able to fabricate successfully cells using the vacuum backfill technique but only after extended degassing of the viscous solutions prior to backfill, and with slow ingress into the cell cavity during the vent to atmospheric pressure that concludes the vacuum backfill process, and with allowance of a stabilization time before removing the now vacuum backfilled cell to plug the fill hole with epoxy. This is explained in more detail in the examples.

Comparative Example 1

(Prior Art Polymer Thickened Solution) :

A self-erasing electrochemichromic solution was prepared based on the prior art consisting of :

0.025M methylviologen perchlorate

0.025M 5,10-dihydro-5,10-dimethylphenazine

15% weight/volume (11.2% wt per wt)

polymethylmethacrylate (90,000 average molecular weight)

dissolved in propylene carbonate (PC). 0.025M tetraethylammonium perchlorate was added as inert current carrying electrolyte. The solution was prepared under oxygen-free conditions and anhydrous argon gas was bubbled through the solution to further deoxygenate the solution. A roughly 24 cm x 5 cm window cell was fabricated according to the construction shown in Figure 1. Cell area was about 110 cm"2". The cell cavity was formed by silk-screening a roughly 2 mm x 150 micron epoxy seal around the edge perimeter of one of the ITO transparent conductive coated glass substrates shown in Figure 1. Sheet resistance for both substrates was about 15 ohms/square. Prior to its silk-screening, glass beads of nominal diameter 150 microns were mixed with the epoxy. Before curing the epoxy, the second ITO coated glass substrate was contacted to the epoxy seal and the now laminated construction was baked in an oven to cure the epoxy. A small gap of approximately 2 mm x 1 mm x 150 micron dimension had been allowed in the epoxy seal so that, upon lamination, a small fill hole was available close to one corner of the seal through which fluid could flow during the vacuum backfilling process. This prior art, PC-based solution was filled at room temperature into the cell cavity using vacuum backfilling. However, because of its relatively high viscosity of about 132 centistokes, difficulties were experienced during backfill. Being so viscous, it was difficult and lengthy to degas the solution ; when vacuum was first applied, the solution frothed and it was necessary to wait about 10 minutes for the solution to degas under vacuum. Also, while venting back to inert atmosphere and with the cell fill hole submerged within the solution, solution ingress into the cell cavity was somewhat slow ; it took about two minutes to fill the approximately 1.7 cc cell cavity. Finally, approximately five minutes needed to be allowed prior to removing from the vacuum oven to allow time for stabilization and pressure equilibration. Transmission at zero applied potential and measured at the center of the window was 83.7%T. When 1 volt potential was applied across the electrochemichromic solution via bus bars that were attached to the outer perimeter of the respective ITO transparent conductors that sandwiched said solution, the transmission dimmed to about 11.8%T. Current leakage was about 4.4 amperes per square metre of window area. When first bleached after two hours of prolonged colouration at 1 volt, segregation as evidenced by a deep blue band adjacent to one of the bus bars and a deep yellow/brown band adjacent to the opposite bus bars was noticeable and cosmetically objectionable.

Example 2 (17.4% wt/wt CES In PC) :

A window cell identical to that described in Comparative Example 1 was filled using the vacuum backfill technique with a solution consisting of :

0.025M methylviologen perchlorate

0.025M 5,10-dihydro-5,10-dimethylphenazine

0.025M tetraethylammonium perchlorate

dissolved in a 17.4% wt per wt (25% wt/vol) mixture of cyanoethylsucrose with propylene carbonate. This solution had a low viscosity, 4.48 centistokes and no difficulties were experienced during vacuum backfill. Total time required to vacuum backfill was only about five minutes which compares very favourably to the 17 minutes required to vacuum backfill the considerably more viscous solution of Example 1 into an identical cell using the identical vacuum backfill apparatus. Transmission at zero applied potential and measured at the cell centre was about 84.2%T which dimmed to about 10.5%T when 1 volt potential was applied. Current leakage was about 4.4 amperes per square metre. When first bleached after two hours of prolonged colouration, segregation of the anodic and cathodic species to the respective bus bar electrodes was somewhat noticeable.

Example 3 (80% wt/wt CES in PC) :

A window cell identical to that described in Comparative Example 1 was filled with an electrochemichromic solution of 0.025 molar methylviologen hexafluorophosphate, 0.025 molar 5,10-dihydro-5,10-dimethylphenazine, and 0.025 molar hexabutylammonium hexafluorophosphate in a propylene carbonate/cyanoethylsucrose solvent. In this case, the amount of cyanoethylsucrose added to propylene carbonate was increased to 80% wt per wt. The resulting solution was quite viscous (1645 centistokes) and vacuum backfilling, although ultimately successful, was difficult and took approximately 60 minutes to complete in the particular vacuum backfilling apparatus used. This was due to the need to allow time for the viscous solution to degas, for it to slowly fill the cell cavity and for the filled solution to stabilize within the cell cavity. Transmission at zero potential and measured at the cell centre was about 85.5%T which dimmed to about 12.8%T when 1 volt potential was

applied. Current leakage was about 0.04 amperes per square metre which is exceptionally low. Coloration and, in particular, bleach response times were slow ; however, colouration and bleach uniformity were exceptionally uniform. Also, when first bleached after two hours prolonged colouration at 1 volt, segregation was negligible such that a window device fabricated using the electrochemichromic solution of this example would be commercially practical in applications where prolonged colouration of several hours or more is a functional requirement.

Example 4 (Pure CES) :

An electrochemichromic solution was formulated consisting of :
0.025M methylviologen hexafluorophosphate
0.025M 5,10-dihydro-5,10-dimethylphenazine
0.025M tetrabutylammonium hexafluorophosphate
dissolved in pure cyanoethylsucrose. The solution was very viscous and was like molasses. It could not be vacuum backfilled at room temperature but it was possible to fill a window cell such as is described in Comparative Example 1 when vacuum backfilling was performed at 50°C. It took about 60 minutes to vacuum backfill the cell at this temperature. No voids were left in the 110 $cm^2$ x 150 micron cell so filled. The pure-CES based solution filled into the window cell had a transmission of 82.6%T when measured at the cell center at zero applied potential. When 1 volt was applied across the cell, transmission dimmed to about 16.1%T. Coloration and bleach response rate were very slow ; however, colouration and bleaching were very uniform. Also, when first bleached after prolonged colouration for 2 hours, practically no segregation was seen. Current leakage for this solution in this cell was in the microamperes per square metre range. This cell showed excellent memory with colouration being maintained for days at open circuit.

Comparative Example 5

(Prior Art PC in 14 cm x 14 cm Window) :

To illustrate the benefit of customizing leakage current so that colouration uniformity, low segregation, and bleach response are optimized, square windows of dimension 14 cm x 14 cm x 150 micron cell thickness were fabricated according to the construction schematically shown in Figure 1. A window so constructed that used ITO of sheet resistance about 25 ohms/square was filled with a solution comprising :
0.025M methylviologen perchlorate
0.025M 5,10-dihydro-5,10-dimethylphenazine
0.025 tetraethylammonium perchlorate in pure propylene carbonate.

Bus bars were attached around the perimeter edges and a potential of 1 volt was applied. At rest potential, the electrochemichromic window so formed was about 86% transmitting. This window coloured deeply immediately adjacent to the bus bars, but did not colour in the centre, such that such a window would be commercially unacceptable. Also, when this window was prolongly coloured at 1 volt for 15 minutes, very significant segregation of the reduced cathodic species to the one bus bar and the oxidized anodic species to the other bus bar was seen.

When another cell was filled with this solution, but this time using ITO of sheet resistance about 15 ohms/square as the transparent conductors that sandwiched the electrochemichromic solution, the centre of the window still failed to dim appreciably when 1 volt was applied. The centre dimmed only to about 40%T (although, as can be expected given the lower sheet resistance of ITO used, the coloured region closer to the bus bar increased somewhat in area, while the central nondimmed area proportionally decreased in size). Segregation after prolonged colouration at 1 volt for 15 minutes was improved over what was seen as described above when this solution had been used in a cell that utilized 25 ohms/square ITO but was nevertheless still significant.

Example 6 (PC/CES in 14 cm x 14 cm Window) :

By contrast, when a similar cell to that described in Comparative Example 5 was filled with equivalent electrochemichromic solution, but this time using cyanoethylsucrose in 43.1% wt/wt in PC and using 15 ohms/square ITO, the central region dimmed appreciably (down to 23%T) and uniformly such that the window would be commercially practical. Segregation after prolonged colouration at 1 volt for 15 minutes for this PC solution with 43.1% wt/wt cyanoethylsucrose added was only slight to negligible and was demonstrably superior to the windows described previously that utilized pure propylene carbonate solutions. Applications such as large

area architectural and automotive windows, office partition panels, and large area mirrors become practical using the low current leakage solvents containing cyanoethylsucrose.

Comparative Example 7 and Example 8 (33 cm × 33 cm Large Area Window) :

To further illustrate the benefits of reducing current leakage, large area windows, of dimension 33 cm × 33 cm and with an interpane spacing of about 200 microns, were fabricated using the construction schematically described in Figure 1. The ITO transparent conductors used were 8 ohms/square sheet resistance. One of these windows was filled with a prior art solution comprising :

0.025M benzylviologen tetrafluoroborate
0.025M 5,10-dihydro-5,10-dimethylphenazine
0.025M tetrabutylammonium tetrafluoroborate
15% wt/volume polymethylmethacrylate (90,000 average molecular weight)

dissolved in propylene carbonate (Comparative Example 7). When filled into the 33 cm × 33 cm window described above, this prior art, polymer thickened, PC-based solution failed to colour appreciably at the centre of the window when 1 volt potential was applied to the ITO transparent conductors that sandwiched the electrochemichromic solution. Whereas the solution at the perimetal edges immediately adjacent to the bus bar connectors coloured deeply, a large area of the central portion of this window essentially did not colour ; colouration was overall extremely nonuniform and such a window was commercially impractical. Also, when first bleached after prolonged colouration for 2 hours at 1 volt applied potential, very severe segregation of the reduced cathodic species and the oxidized anodic species was seen adjacent to the bus bars.

An identical 33 cm × 33 cm × 200 micron interpane thickness window was filled with an electrochemichromic solution according to the present invention that consisted of :

0.025M methylviologen hexafluorophosphate
0.025M 5,10-dihydro-5,10-dimethylphenazine
0.025M tetrabutylammonium hexafluorophosphate

dissolved in a 40% wt/wt mixture of cyanoethylsucrose and methylsulfolane (MS), (Example 8). At zero applied potential, transmission at the centre of this window was 82.5%T. When 1 volt potential was applied, the window coloured uniformly and reached 11.0%T close to the center when fully dimmed. Bleaching was also visibly uniform. When first bleached after 2 hours prolonged colouration at 1 volt applied potential, segregation was only slight and was not sufficiently noticeable to render such a window commercially impractical.

Example 9 (Mixture Of Solvents) :

An electrochemichromic solution was formulated consisting of :

0.025M methylviologen hexafluorophosphate
0.025M 5,10-dihydro-5,10-dimethylphenazine
0.025M tetrabutylammonium hexafluorophosphate

dissolved in a 50% : 50% vol/vol mixture of 3-hydroxypropionitrile (HPN) and 2-acetylbutyrolactone (ABL) to which mixture 40% wt/wt cyanoethylsucrose had been added. When filled into a window as described in Comparative Example 1, transmission at the window centre with zero applied potential was 85.5% which dimmed to 11.9%T when 1 volt potential was applied. Coloration and bleaching were uniform. Only small segregation was seen after prolonged colouration for two hours. Leakage current was about 1.3 amperes per square metre. Viscosity was about 22.2 centistokes.

## Claims

1. An electrochemichromic liquid comprising :
   a redox chemical pair whose colour is variable by variation in the applied voltage and a solvent comprising from at least about 5% weight by volume of a nonpolymeric material having a volume resistivity of at least $5 \times 10^9$ ohm.cm at 25°C and a dielectric constant of at least 15 at 25°C and 60 hertz.

2. An electrochemichromic liquid as claimed in claim 1 wherein the nonpolymeric material is cyanoethylsucrose.

3. An electrochemichromic liquid according to claim 1 in which the solvent comprises up to about 90% weight by volume of the nonpolymeric material.

4. An electrochemichromic liquid according to claim 1 or 2 in which the solvent comprises of from about 90 to 500% weight by volume of the nonpolymeric material.

5. An electrochemichromic liquid according to any of claims 1 to 4 in which the solvent additionally comprises propylene carbonate, 3-hydroxypropionitrile, 2-acetylbutyrolactone, 3,3′-oxydipropionitrile, 3-methylsulpholane, or 2-methylglutaronitrile, or a mixture thereof.

6. An electrochemichromic liquid according to any of claims 1, 2, 4 and 5 in which the solvent comprises substantially only the nonpolymeric material.

7. An electrochemichromic liquid according to any of claims 1, 2 and 4 to 6 in which the solvent comprises at least about 25% by volume of 2-acetylbutyrolactone.

8. An electrochemichromic liquid according to any of claims 1 to 7 in which the redox chemical pair comprises from 0.02 to 0.05 molar of methylviologen perchlorate or methylviologen hexafluorophosphate and from 0.02 to 0.05 molar 5,10-dihydro-5,10-dimethylphenazine.

9. An electrochemichromic device comprising :
at least two spaced apart plates, each having an inwardly facing conductive surface ;
an electrochemichromic liquid located between the inwardly facing conductive surfaces, the liquid comprising :
a redox chemical pair whose colour is variable by the variation of the applied voltage and a solvent comprising from at least about 5% weight by volume of a nonmpolymeric material having a volume resistivity of at least 5 × $10^9$ ohn.cm at 25°C and dielectric constant of at least 15 at 25°C and 60 hertz.

10. A device as claimed in claim 9 wherein the electrochemichromic liquid is as claimed in any of claims 2 to 9.

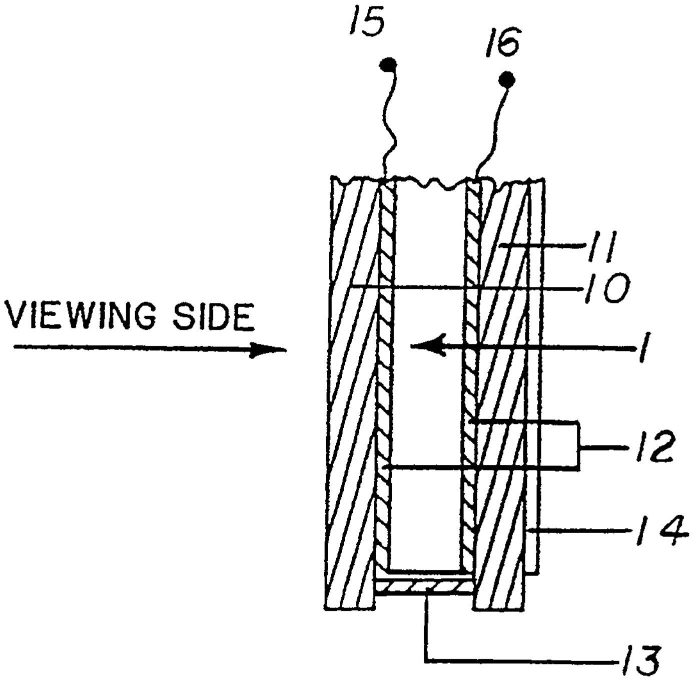


Fig 1

European Patent Office

# EUROPEAN SEARCH REPORT

Application Number

EP 90 31 4098

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | EP-A-0 240 226 (GENTEX CORP.)<br>* Page 6, lines 19-34; page 8, line 53 - page 10, line 54; page 13, lines 27-57; claims 1-7 *<br>--- | 1,2,5,8 -10 | C 09 K 9/02<br>G 02 F 1/15 |
| Y | US-A-3 317 329 (H.D. WILLIAMS)<br>* Whole document *<br>----- | 1,2,5,8 -10 | |
| | | | TECHNICAL FIELDS SEARCHED (Int. Cl.5) |
| | | | C 09 K<br>G 02 F |

The present search report has been drawn up for all claims

| Place of search | Date of completion of the search | Examiner |
|---|---|---|
| THE HAGUE | 28-02-1991 | VAN DER POEL W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)